# EUROPEAN PATENT SPECIFICATION

(11) **EP 3 150 016 B1**
(45) Date of publication and mention of the grant of the patent: **05.04.2023**
(21) Application number: 14734007.9
(22) Date of filing: 28.05.2014
(51) Int. Cl.: H04L 5/00, H04L 5/14, H04W 16/24, H04W 36/06, H04W 84/08

(54) **A METHOD FOR OPERATING A WIRELESS NETWORK, A WIRELESS NETWORK AND A BASE STATION**
VERFAHREN ZUM BETRIEB EINES DRAHTLOSEN NETZWERKS, DRAHTLOSES NETZWERK UND BASISSTATION
PROCÉDÉ DE FONCTIONNEMENT D'UN RÉSEAU SANS FIL, RÉSEAU SANS FIL ET STATION DE BASE

(43) Date of publication of application: 05.04.2017
(73) Proprietor: NEC Corporation, Tokyo 108-8001 (JP)
(72) Inventor: ROST, Peter, 69124 Heidelberg (DE); PRASAD, Athul, 00320 Helsinki (FI)
(74) Representative: Ullrich & Naumann PartG mbB
(86) International application number: PCT/EP2014/061148
(87) International publication number: WO 2015/180773

(56) References cited:
- WO-A1-2012/047144
- WO-A1-2012/166034
- US-A1- 2012 155 436
- US-A1- 2013 182 630
- US-A1- 2013 223 294

## Description

The present invention relates to a method for operating a wireless network, wherein a base station is provided for data communication in uplink, UL, and downlink, DL, direction with at least one mobile device. Further, the present invention relates to a wireless network, wherein a base station is provided for data communication in uplink, UL, and downlink, DL, direction with at least one mobile device. Further, the present invention relates to a base station, wherein the base station is provided for data communication in uplink, UL, and downlink, DL, direction with at least one mobile device.

| **Abbreviations** | |
|---|---|
| 3GPP | Third Generation Partnership Project |
| BS | Base Station |
| CGI | Cell Global Identity |
| CQI | Channel Quality Information |
| eNB | evolved Node B |
| E-UTRAN | Evolved Universal Terrestrial Radio Access Network |
| eICIC | enhanced Inter-Cell Interference Coordination |
| FDD | Frequency Division Duplexing |
| LTE | Long Term Evolution |
| MCS | Modulation and Coding Scheme |
| PCI | Physical Cell ID |
| SIB | System Information Block |
| TDD | Time Division Duplexing |
| UE | User Equipment |
| UL | Uplink |
| ULI | User Location Information |

Currently, wireless networks or wireless communication systems are defined for half duplex communications, where the base station or eNodeB, eNB, as well as the mobile devices or user equipment, UE, sends or receives data at one point of time. Here time could imply time-frequency resources or physical resource blocks in the context of a communication system.

Currently defined standards in LTE, see 3GPP TS 36.300, "Evolved Universal Terrestrial Radio Access (E-UTRA) and Evolved Universal Terrestrial Radio Access Network (E-UTRAN); Overall description; Stage 2", are mainly applicable only for a system based on half duplex base stations. The frame structure that is defined, the way basic system information is broadcasted to the UE using system information blocks, SIBs, etc. will work only when uplink and downlink is split either in time, TDD, or frequency, FDD, domain. Consider scheduling of DL and UL resources as an example. Currently, the physical resource blocks over which UE can send and receive data are completely controlled by the eNB. By using a full duplex BS, uplink and downlink can be done simultaneously. This would require enhancements in the currently defined system for supporting such an operation, e.g. in terms of resource allocation. Also, when BS operates in full duplex mode, this would also lead to increased control channel interference conditions at the UE side, since the UE would still be operating in half duplex mode. The interference source at the UE for e.g. engaging in UL could be from the BS sending DL data using the same resources. It could also be from a neighboring UE engaged in UL, while receiving DL data from the BS. Currently defined elCIC techniques for mitigating interference are not designed for such intra-cell interference problems, since such scenarios were not envisioned while designing the system.

Such prior-art system is disclosed , for example, in US 2013/223294 A1 (KARJALAINEN JUHA PEKKA [FI] ET AL) 29 August 2013 (2013-08-29), or, in WO 2012/047144 A1 (ERICSSON TELEFON AB L M [SE]; SIOMINA IANA [SE]; KAZMI MUHAMMAD [SE]) 12 April 2012 (2012-04-12).

Channel Quality Information, CQI, is currently estimated by the UE using specific resource blocks sent by the eNB specifically for such estimation. While using full duplex mode, UE might estimate the quality of the channel in such a manner that eNB might not be able to infer the reason or interference source. This is due to the fact that eNB might estimate the interference to be due to neighbor cells, when the source could be the same cell which is operating in full duplex mode.

It is an object of the present invention to improve and further develop a method for operating a wireless network, an according network and a base station for allowing a very high degree of utilization of available resources within the network by simple means.

The present invention is defined in the appended independent claims to which reference should be made. Advantageous features are set out in the appended dependent claims.

According to the invention is has been recognized that it is possible to provide a very high degree of utilization of available resources and high transmission data rates within the network by simply realizing an enhanced mode of operation of the base station. Concretely, the base station is operated in a full duplex data communication mode during communication with the at least one mobile device. While the base station is enabled for full duplex data communication in the uplink and downlink direction, the at least one mobile device can remain in half duplex data communication, either sending or receiving data. This remaining of the mobile device in half duplex data communication can be realized due to the additional complexity and costs involved in developing such mobile device hardware. Also, with sufficient amount of diversity in terms of users in a base station cell, higher data rates are possible with the use of full duplex communication at the base station side alone.

Within a preferred embodiment and with regard to a very simple realization of a full duplex data communication mode the base station can comprise at least two different virtual half duplex cells. The definition of at least two different virtual half duplex cells provides a so called transparent mode for the mobile device, i.e. from the perspective of the mobile device. In other words, the transparency here is defined from a mobile device perspective, whether the mobile device is aware of the base station providing full duplex communication or not. In the transparent mode the mobile device is unaware of the fact that the base station is capable of supporting full duplex data communication.

Preferably, the two virtual half duplex cells can be realized or defined within one full duplex cell of the base station. All full duplex cells of the base station could be realized as containing two virtual half duplex cells.

In a simple way the two virtual half duplex cells can have different Physical Cell IDs, PCIs, but can have the same Cell Global Identity, CGI. From the perspective of the mobile device said two virtual half duplex cells are two separate cells with different PCIs. However, for a core network the two virtual half duplex cells are one cell with the same CGI.

Within a preferred embodiment the at least one mobile device or each mobile device can be allocated into or can be assigned to each virtual half duplex cell. Thus, a high degree of utilization of available resources within the network is possible.

Regarding a reliable allocation or assignment of the mobile device or the mobile devices to each virtual half duplex cell several mobile devices can be grouped using or basing on geographical location and/or a channel condition. This will provide an effective use of available resources.

For providing a simple and reliable communication between the mobile device and the base station within the claimed method the base station can send different signaling information or two different physical layer control channels and/or associated signaling information for the same physical full duplex cell to the at least one mobile device. Such information can comprise cell specific reference signals and/or a system information block.

For providing an effective method for operating the wireless network and for reducing control signaling a handover of the at least one mobile device between the virtual half duplex cells can be performed internally within the base station. With regard to a very effective performance a handover of the at least one mobile device between the virtual half duplex cells can be performed using X2 handover procedure.

For an effective utilization of available resources mitigation of interference between simultaneous operations is preferred. Within a preferred embodiment an enhanced Inter-Cell Interference Coordination, eICIC, mechanism can be applied for mitigating interference between simultaneous UL/DL operations of a cell or macro cell, i.e. between virtual half duplex cells.

For transparent mode, since frequent and fast handover would be required, accurate measurement configurations are important. Within a preferred embodiment the base station can send measurement configurations via Radio Resource Control, RRC, signaling to the at least one mobile device. This simplifies the provision of effective measurement configurations.

Within a further preferred embodiment a non-transparent mode of operation is provided, wherein the full duplex operation is provided in a non-transparent manner to the at least one mobile device, meaning that the mobile device is aware of the fact that there are full duplex transmissions from its serving base station or cell. Within such an embodiment it is preferred that each cell of the base station can provide both UL and DL in the same time or frequency resources or physical resource blocks.

This could provide the disadvantage that the mobile device could estimate the channel conditions inaccurately due to intra-cell interference from its own serving cell transmissions. For overcoming this problem the base station can configure a static resource or static resources which is or are used by the at least one mobile device for measuring a quality of a channel.

Within a preferred embodiment the static resource or static resources can be in half duplex mode. Within further preferred embodiments the static resource or static resources can be reserved physical resource blocks within a subframe.

For providing a very reliable and effective method for operating a wireless network information about reserved resource blocks within a subframe can be signaled to the at least one mobile device. Depending on individual situations the signaling can be performed, if at least one definable characteristic of the static resource or static resources varies over a defined time interval by a defined amount or threshold. Within an alternative preferred embodiment the signaling can be performed in a static manner using at least one system information block or using any other control information meant for the mobile devices or UEs.

Preferably, the non-transparent mode can be operated in using an intra-eNB, intra-cell carrier aggregation mechanism with simultaneous UL/DL modes assumed to be two different carriers from mobile device's perspective. Using full duplex base stations or eNBs, the same carrier can be used for UL and DL. This means that, in an FDD system with separate carriers for UL and DL like in conventional systems, the half-duplex mobile device or UE could be configured to view the system as one employing carrier aggregation technique, with UL and DL resources scheduled in different carriers, but with a common carrier for control channel signaling. Using such a mechanism, the system would emulate carrier aggregation from mobile device's or UE's perspective, but operating in a full duplex mode from an overall system perspective. The system will use one carrier for control signalling and then two configurations: a) carrier aggregation with carrier 1 for UL and carrier 2 for DL, and b) carrier aggregation with carrier 2 for UL and carrier 1 for DL.

For avoiding high interference on control channels due to simultaneous UL/DL operation almost blank subframe concept can be used.

Additionally or alternatively a power control technique can be used to mitigate interference. Identifying the interference source as well as estimating the accurate link quality excluding intra-cell interference is important for mitigating interference.

Within a preferred embodiment the base station can be an eNodeB, eNB.

Important aspects of preferred embodiments of the claimed method, network and base station are summarized as follows:
Embodiments of the invention provide a method for providing full duplex data communication in a transparent manner to a mobile device or UE using virtual cell concepts whereby the mobile device or UE considers a full duplex cell as two virtual half duplex cells. Preferably, the full duplex base station sends two different physical layer control channels and associated signaling information such as system information blocks, etc., for the same physical cell.

Embodiments of the invention provide also means for providing simultaneous UL/DL in a non-transparent manner by reusing the cell resources as well. The grouping here could essentially involve intelligent scheduling of resources to each mobile device or UE to minimize interference within the cell. This could preferably be done by configuring static resources which are in half duplex mode and this information can be signaled to the mobile device or UE so that it can measure these resources for estimating the channel conditions.

A handover optimization can be performed in transparent mode using multiple PCIs for the same cell, but using only one CGI, in order to hide such cells from the core network, for minimizing control and user plane signaling.

It is provided a method for operating a full duplex base station having half duplex user equipment or at least one mobile device within its coverage region. The operation comprises a full duplex base station or eNB as two different virtual cells each operating as half duplex base station or eNB from UE or mobile device perspective with different PCIs but having the same CGI, and allocating each mobile device or UE into each virtual cell. There can be used almost blank subframes - still including pilots or reference signals - to overcome intra-cell interference. But this could lead to a sub-optimal resource utilization due to the unused blank subframes.

Alternatively, the operation can comprise the same base station or eNB as a single cell with unique CGI and PCI by having mechanisms such as pre-configured measurement resources for channel estimation. Further, carrier aggregation can be used to differentiate resources from the mobile device or UE perspective.

By means of the present invention higher spectral efficiency and therefore better utilization of available spectral resources can be provided. The present invention provides minimum impacts to mechanisms that are already defined in former systems and methods.

There are several ways how to design and further develop the teaching of the present invention in an advantageous way. To this end it is to be referred to the patent claims subordinate to patent claim 1 on the one hand and to the following explanation of preferred examples of embodiments of the invention, illustrated by the drawing on the other hand. In connection with the explanation of the preferred embodiments of the invention by the aid of the drawing, generally preferred embodiments and further developments of the teaching will be explained. In the drawings
- Fig. 1: is showing a conventional base station in the form of an eNB with three cells switching between DL and UL over time,
- Fig. 2: is showing an embodiment of a base station in full duplex mode and in transparent mode for the mobile device according to the invention and
- Fig. 3: is showing a further embodiment of a base station in full duplex mode and in non-transparent mode for the mobile device according to the invention.

Embodiments of the invention comprise two ways of provisioning such a system which are called as transparent and non-transparent. The transparency here is defined from an end user or UE perspective, whether a UE is aware of the BS or eNB providing full duplex communication or not. In the transparent method, UE is unaware of the fact that eNB is capable of supporting full duplex communication. This could be possible by using two different - virtual - cell IDs at the eNB, with each "cell" providing half duplex communication to the UEs. This method would also require an efficient means to group the UEs, possibly using geographical location profiles or channel conditions to assign it to corresponding eNB cells. Such a mechanism would essentially mean that depending on cell ID assignment algorithm involved, there could be frequent handovers between the - virtual - cells. Since both "cells" share the same backhaul infrastructure, this operation could be done internally in an implementation specific manner or using X2 handover procedure with minimal involvement of the core network.

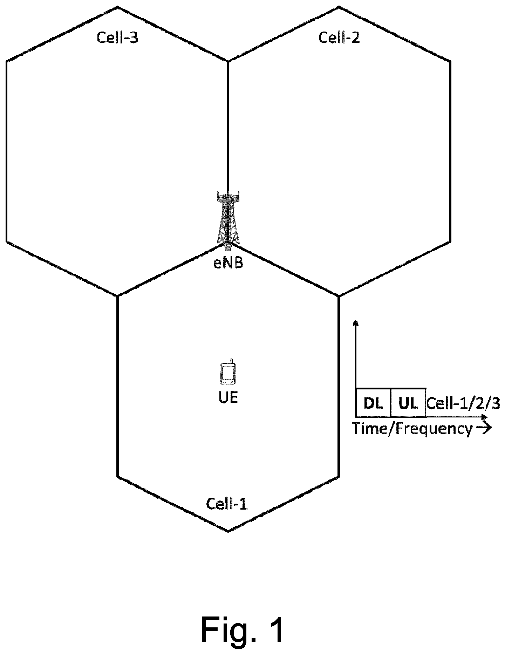

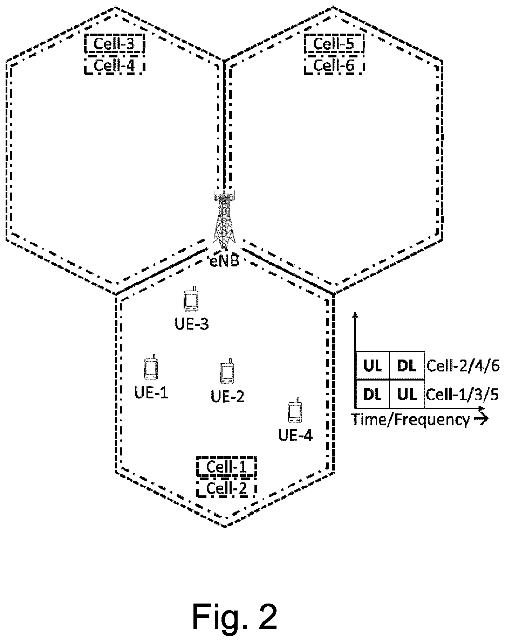

The conventional three sector/cell macro eNB is shown in Figure 1, with time/frequency resources being used in a half duplex mode. The full duplex eNB in transparent mode could be envisioned as shown in Figure 2, with each cell being split into two virtual cells from the UE perspective. The eNB can then group UEs within its coverage area according to the criteria mentioned earlier. Even though the cell coverage footprint is shown as slightly different for each virtual cell, it is only for illustrative purposes alone and the coverage of each virtual cell would be the same, depending on real-time channel conditions.

One of the drawbacks of this approach could be the higher signaling involved in terms of virtual handover between cells as well as possible core network signaling impacts, which needs to be minimized. For instance, with this approach, the eNB for the same cell would have to send two different sets of control signals such as cell specific reference signals, as well as system information blocks, etc. causing sub-optimal performance within an actual cell. The data/user plane signaling with the core network could be avoided by using a "virtual" X2 handover between the virtual cells, within the same macro cell. Also, if core network features such as user location information, ULI, location specific charging, etc., see 3GPP TS 23.271, "Functional stage 2 description of Location Services (LCS)", are used, eNB would have to report to the charging functions in the core network each time UE changes the virtual cell. This would lead to additional - control plane - signaling, which could be avoided in non-transparent mode. Apart from the minimal standardization requirements involved, currently defined eICIC mechanisms could be applied for mitigating interference between simultaneous UL/DL operations of a macro-cell, i.e. between virtual cells.

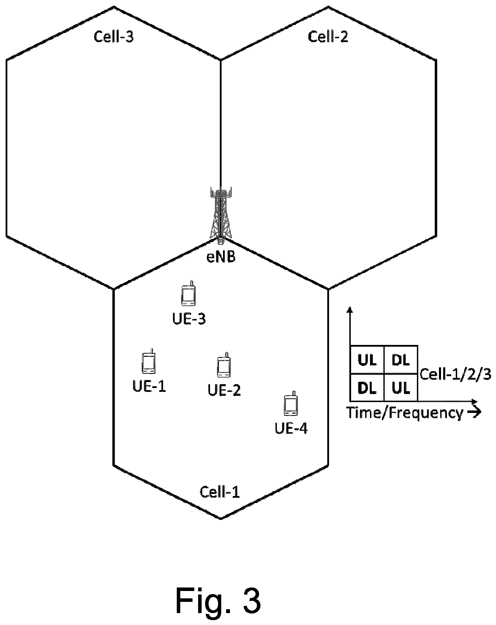

In the non-transparent mode of operation, the full duplex operation is provided in a non-transparent manner to the UE, meaning that UE is aware of the fact that there are full duplex transmissions from its serving cell. This method would require more standardization effort for provisioning services to the UE in an efficient manner. The main advantage of this approach would be that there is less control signaling and virtual handover related core network signaling involved. The possible operation is as shown in Figure 3, with each cell having both UL and DL in the same time/frequency resources or physical resource blocks. This would also mean that UE could estimate the channel conditions inaccurately due to intra-cell interference from its own serving cell transmissions. For overcoming this, the eNB can configure static resources which will be used by UEs for measuring the quality of the channel. The static resources could be reserved resource blocks within a subframe, and this information needs to be signaled to the UE. The signaling could be done dynamically if the measurement resources vary over time, depending on the cell load, etc. Alternately, this could be done in a static manner using system information blocks. Thus, the UE is aware of the measurement resource configurations provisioned by the eNB.

The non-transparent mode can also be operated in using the intra-eNB, intra-cell carrier aggregation mechanism with the simultaneous UL/DL modes assumed to be two different carriers from UE perspective. Using full duplex base stations or eNBs, the same carrier can be used for UL and DL. This means that, in an FDD system with separate carriers for UL and DL like in conventional systems, the half duplex mobile device or UE could be configured to view the system as one employing carrier aggregation technique, with UL and DL resources scheduled in different carriers, but with a common carrier for control channel signaling. Using such a mechanism, the system would emulate carrier aggregation from mobile device's or UE's perspective, but operating in a full duplex mode from an overall system perspective. The system will use one carrier for control signalling and then two configurations: a) carrier aggregation with carrier 1 for UL and carrier 2 for DL, and b) carrier aggregation with carrier 2 for UL and carrier 1 for DL.

### Measurement Configuration for Transparent Mode:

For transparent mode, since frequent and fast handover would be required, accurate measurement configurations by the mobile device or UE are important. But, since the virtual cells involved here are part of the same macro cell, separate measurement configurations might not be required. But this would also depend on the power control algorithms the eNB might employ for inter-virtual-cell interference mitigation both on control as well as data/shared channels. This would mean that if DL power control is used, the macro eNB should send the measurement configurations via Radio Resource Control, RRC, signaling to the UE. Whereas, if power control is not used, macro eNB need not send any measurement configurations other than the ones based on normal neighbor relations used in the half duplex scenario.

### Handover Optimization for Transparent Mode:

Optimizations in terms of handover needs to be done in transparent mode, in both control and user plane. In user plane, X2 handover is assumed to be done in a virtual mode, such that eNB handles the routing of the data to the proper virtual cell and the information is not updated in the Mobility Management Entity, MME, context unless the overlaying macro cell information is changed. This could be done for instance by using virtual cell concept only in the lower ID layer, and using same Cell Global Identity, while using different Physical Cell IDs, PCI, see 3GPP TS 36.423, "Evolved Universal Terrestrial Radio Access Network (E-UTRAN); X2 Application Protocol (X2AP)". Since using such a mechanism essentially hides the cell change from the core network, this would require new mechanisms for deriving the CGIs, compared to ones defined currently. Also, since this leads to a higher number of PCI reuse, conflict of PCIs between neighboring cells should be avoided.

### Intra-Cell Interference Coordination in Non-Transparent Mode:

In non-transparent mode, there could be high interference on the control channels due to simultaneous UL/DL operation. This could be avoided using almost blank subframe concept, see 3GPP TS 36.300, "Evolved Universal Terrestrial Radio Access (E-UTRA) and Evolved Universal Terrestrial Radio Access Network (E-UTRAN); Overall description; Stage 2", whereby interfering subframes are muted by the eNB depending on the channel conditions of the victim UE. If the UL signal of the victim UE is getting drowned due to simultaneous DL transmissions from the eNB, the eNB should mute the downlink subframes for the duration during which UL UE, Uplink-UE, experiences severe interference. The vice versa is applicable if the victim UE is in DL and neighboring UL UE is drowning the DL signals from the eNB. Power control techniques could also be used to mitigate such interference. The key factor here is identifying the interference source as well as estimating the accurate link quality excluding intra-cell interference. For this purpose, static subframes or resources are proposed to be used, which gives an accurate estimate of the link quality that would be experienced by the UE without having intra-cell interference. This would also help eNB in determining the modulation and coding scheme that needs to be used both in UL and DL direction.

## Claims

1. A method for operating a wireless LTE network, wherein a base station is provided for data communication in uplink, UL, and downlink, DL, direction with at least one mobile device, said method being **characterized in that** the base station is operated in a full duplex data communication mode during communication with the at least one mobile device, and **in that** the base station comprises two different virtual half duplex cells realized or defined within one full duplex cell of the base station and having different Physical Cell IDs, PCIs, but have the same Cell Global Identity, CGI,
wherein the coverage of each virtual cell is the same,
wherein an enhanced Inter-Cell Interference Coordination, eICIC, mechanism is applied for mitigating interference between simultaneous UL/DL operations of a cell or macro cell, i.e. between the two virtual half duplex cells, and
wherein additional control plane signaling is avoided by using a non-transparent mode.

2. A method according to claim 1,
wherein the at least one mobile device or each mobile device is allocated into or assigned to each virtual half duplex cell and/or
wherein several mobile devices are grouped using geographical location and/or a channel condition and/or
wherein the base station sends different signaling information or two different physical layer control channels and/or associated signaling information for the same physical full duplex cell to the at least one mobile device and/or
wherein a handover of the at least one mobile device between the virtual half duplex cells is performed internally within the base station and/or
wherein a handover of the at least one mobile device between the virtual half duplex cells is performed using X2 handover procedure.

3. A method according to claim 1 or 2, wherein the base station sends measurement configurations via Radio Resource Control, RRC, signaling to the at least one mobile device.

4. A method according to one of claims 1 to 3, wherein the base station is an eNodeB, eNB.

5. A wireless LTE network for carrying out the method according to any one of claims 1 to 4.

6. A base station for carrying out the method according to any one of claims 1 to 4.

## Patentansprüche

1. Verfahren zum Betreiben eines drahtlosen LTE-Netzes, wobei eine Basisstation für eine Datenkommunikation in Uplink-, UL, und Downlink-, DL, Richtung mit mindestens einem Mobilgerät bereitgestellt ist, wobei das Verfahren **dadurch gekennzeichnet ist, dass** die Basisstation während der Kommunikation mit dem mindestens einen Mobilgerät in einem Vollduplex-Datenkommunikationsmodus betrieben wird und dass die Basisstation zwei unterschiedliche virtuelle Halbduplex-Zellen aufweist, die innerhalb einer Vollduplex-Zelle der Basisstation realisiert oder definiert sind und unterschiedliche Physical Cell IDs, PCIs, aufweisen, aber die gleiche Cell Global Identity, CGI, aufweisen,
wobei die Abdeckung jeder virtuellen Zelle die selbe ist,
wobei ein erweiterter Inter-Cell Interference Coordination (eICIC)-Mechanismus angewendet wird, um Interferenzen zwischen gleichzeitigen UL/DL-Operationen einer Zelle oder Makrozelle, d.h. zwischen den beiden virtuellen Halbduplex-Zellen, abzuschwächen, und
wobei eine zusätzliche Signalisierung auf der Steuerebene durch Verwendung eines nicht-transparenten Modus vermieden wird.

2. Verfahren nach Anspruch 1,
wobei das mindestens eine Mobilgerät oder jedes Mobilgerät jeder virtuellen Halbduplexzelle zugeordnet oder zugewiesen wird und/oder
wobei mehrere Mobilgeräte anhand des geografischen Standorts und/oder einer Kanalbedingung gruppiert werden und/oder
wobei die Basisstation unterschiedliche Signalisierungsinformationen oder zwei unterschiedliche Physical Layer Control Channels und/oder zugehörige Signalisierungsinformationen für dieselbe physikalische Vollduplexzelle an das mindestens eine Mobilgerät sendet und/oder
wobei ein Handover des mindestens einen Mobilgeräts zwischen den virtuellen Halbduplex-Zellen intern innerhalb der Basisstation durchgeführt wird und/oder
wobei ein Handover des mindestens einen Mobilgeräts zwischen den virtuellen Halbduplex-Zellen unter Verwendung des X2-Handover-Verfahrens durchgeführt wird.

3. Verfahren nach Anspruch 1 oder 2, wobei die Basisstation Messkonfigurationen über Radio Resource Control, RRC, Signalisierung an das mindestens eine Mobilgerät sendet.

4. Verfahren nach einem der Ansprüche 1 bis 3, wobei die Basisstation ein eNodeB, eNB, ist.

5. Ein drahtloses LTE-Netzwerk zur Durchführung des Verfahrens nach einem der Ansprüche 1 bis 4.

6. Eine Basisstation zur Durchführung des Verfahrens nach einem der Ansprüche 1 bis 4.

## Revendications

1. Procédé de fonctionnement d'un réseau LTE sans fil, dans lequel une station de base est destinée à une communication de données dans une direction de liaison montante, UL, et de liaison descendante, DL, avec au moins un dispositif mobile, ledit procédé étant **caractérisé en ce que**
la station de base est utilisée dans un mode de communication de données en duplex intégral durant une communication avec l'au moins un dispositif mobile,
et **en ce que**
la station de base comprend deux cellules virtuelles en semi-duplex différentes réalisées ou définies à l'intérieur d'une cellule en duplex intégral de la station de base et ayant des ID de cellule physique, PCI, différents mais ayant la même identité globale de cellule, CGI,
dans lequel la couverture de chaque cellule virtuelle est la même,
dans lequel un mécanisme de coordination d'interférence intercellule améliorée, elCIC, est appliqué pour atténuer une interférence entre des opérations UL/DL simultanées d'une cellule ou d'une macrocellule, c'est-à-dire entre les deux cellules virtuelles en semi-duplex, et
dans lequel une signalisation additionnelle de plan de commande est évitée en utilisant un mode non transparent.

2. Procédé selon la revendication 1,
dans lequel l'au moins un dispositif mobile ou chaque dispositif mobile est attribué dans ou affecté à chaque cellule virtuelle en semi-duplex et/ou
dans lequel plusieurs dispositifs mobiles sont groupés en utilisant un emplacement géographique et/ou une condition de canal et/ou
dans lequel la station de base envoie des informations de signalisation différentes ou deux canaux de commande de couche physique différents et/ou des informations de signalisation associées pour la même cellule physique en duplex intégral à l'au moins un dispositif mobile et/ou
dans lequel un transfert intercellulaire de l'au moins un dispositif mobile entre les cellules virtuelles en semi-duplex est réalisé en interne à l'intérieur de la station de base et/ou
dans lequel un transfert intercellulaire de l'au moins un dispositif mobile entre les cellules virtuelles en semi-duplex est réalisé en utilisant une procédure de transfert intercellulaire X2.

3. Procédé selon la revendication 1 ou 2, dans lequel la station de base envoie des configurations de mesure via une signalisation de commande de ressource radio, RRC, à l'au moins un dispositif mobile.

4. Procédé selon une des revendications 1 à 3, dans lequel la station de base est un noeud B évolué, eNB.

5. Réseau LTE sans fil pour réaliser le procédé selon l'une quelconque des revendications 1 à 4.

6. Station de base pour réaliser le procédé selon l'une quelconque des revendications 1 à 4.
